# EUROPÄISCHE PATENTSCHRIFT

(11) **EP 1 233 191 B1**
(45) Veröffentlichungstag und Bekanntmachung des Hinweises auf die Patenterteilung: **09.11.2005**
(21) Anmeldenummer: 01128622.6
(22) Anmeldetag: 30.11.2001
(51) Int. Cl.: F15B 7/00, F15B 21/12

(54) **Hydraulischer Oszillator als Antrieb von Maschinen**
Hydraulic oscillator as a machine drive
Oscillateur hydraulique comme entraînement de machine

(30) Priorität: 17.02.2001 CH 2842001
(43) Veröffentlichungstag der Anmeldung: 21.08.2002
(73) Patentinhaber: Globemag L.P., Edinburgh EH3 7TW (GB)
(72) Erfinder: Truninger, Rolf, Dr., 4513 Langendorf (CH)
(74) Vertreter: Haug, Dietmar

(56) Entgegenhaltungen:
- WO-A-97/05387
- DE-A- 2 448 723
- DE-A- 3 705 642
- US-A- 4 760 697
- US-A- 5 916 139
- TRUNINGER R: "ENERGIE: OSZILLIEREN STATT DISSIPIEREN" OLHYDRAULIK UND PNEUMATIK, VEREINIGTE FACHVERLAGE, MAINZ, DE, Bd. 40, Nr. 9, 1996, Seiten 620-622,624, XP000196948 ISSN: 0341-2660
- SHELLEY T: "CUSHION RETURN SPEEDS AUTOMATION EFFICIENCY" EUREKA (INC. ENGINEERING MATERIALS AND DESIGN), FINDLAY PUBLICATIONS, HORTON KIRBY, KENT, GB, Bd. 19, Nr. 7, Juli 1999 (1999-07), Seiten 26-27, XP000832759 ISSN: 0261-2097

## Beschreibung

Die Erfindung betrifft eine Vorrichtung zum kontrollierten Antrieb einer Maschinenachse, mit einem Zylinderkammern aufweisenden hydraulischen Aktuator, einer zwei Anschlüsse aufweisenden Pumpe, die im geschlossenen Kreis hydraulisch mit dem Aktuator verbunden ist, einem Elektromotor, der die Pumpe antreibt, mit mindestens einem Energiespeicher, der mit Potentialkräften auf den hydraulischen Aktuator oder die Maschinenachse wirkt und durch eine Bewegung der Maschinenachse aufgeladen oder entladen wird.

Eine solche Vorrichtung ist aus der US-A-5,916,139 bekannt. Bei dieser Vorrichtung ist in einer ersten Stellung eines schaltbaren Ventils der Energiespeicher mit dem Eingang einer Pumpe und der Ausgang der Pumpe mit einer Zylinderkammer des hydraulischen Aktuators verbunden. Der Kolben des Aktuators wird dadurch in die eine Richtung bewegt. In der zweiten Stellung des schaltbaren Ventils ist die Zylinderkammer mit dem Eingang der Pumpe und der Ausgang der Pumpe mit dem Energiespeicher verbunden, wodurch der Energiespeicher aufgeladen wird, während der Kolben des Aktuators sich in die andere Richtung bewegt. Der Energiespeicher wirkt also unmittelbar auf die Pumpe mit der Folge, daß die auf den Kolben wirkenden Kräfte durch die Pumpe definiert werden. Diese weist eine konstante Drehzahl auf und prägt dem Kolben damit eine Bewegung auf, die unabhängig vom Zustand des Energiespeichers ist. Die Verbindung des Energiespeichers mit dem Eingang der Pumpe wirkt sich auf den Aktuator nur so aus, daß die für den Betrieb des Aktuators von der Pumpe aufzubringende Energie vermindert ist. Druck und Fluß in den Aktuator sind unabhängig vom Energiespeicher. Ferner wird die Bewegungsumkehr des Kolbens mit dem schaltbaren Ventil bewirkt.

Viele Arbeitsmaschinen wie sie z.B. zum Stanzen, Nibbeln, Prägen, Hämmern, Umformen, Spritzgiessen oder Druckgiessen benutzt werden, zeichnen sich durch schnelle zyklische Bewegungen aus. Bei einer Stanzmaschine bestimmt die Kraft des Werkzeugantriebes weitgehend die maximale Grösse der Werkzeuge oder die maximale Dicke des bearbeitbaren Materials. Die Geschwindigkeit des Antriebes wiederum beeinflusst die Hubzahl pro Minute, eine wichtige Kenngrösse hinsichtlich Produktivität.

Wegen den hohen Anforderungen an Kraft und Geschwindigkeit werden die Werkzeugantriebe solcher Maschinen oft hydraulisch ausgeführt. In Verbindung mit schnellen Ventilen und einer elektronischen Steuerung lassen sich so wichtige Prozessparameter wie etwa das Geschwindigkeitsprofil den Erfordernissen des Arbeitsprozesses flexibel anpassen.

Im Bereich geregelter hydraulischer Antriebe hat sich die Ventiltechnik durchgesetzt. Eine typische Lösung der obigen Aufgabe besteht darin, den Arbeitszylinder mit einem Regelventil oder Servoventil auszurüsten. Die Geschwindigkeit des Zylinders kann so genau gesteuert werden. Dem Zylinder lässt sich ein gewünschtes Geschwindigkeitsprofil aufprägen. Neben klassischen Regel- oder Servoventilen gibt es auch eine ganze Reihe von Spezialventilen, die für diese Art von Maschinen entwickelt wurden.

Die Lösung mit Ventilen hat den Nachteil, daß an den Steuerkanten der Ventile erhebliche Drosselverluste entstehen. Diese erwärmen das Hydraulikmedium und führen über die Zeit zu grossen Energie- oder Betriebskosten der Maschine. Aus diesem Grund wurden in letzter Zeit neue Lösungen diskutiert. Eine vorteilhafte Lösung besteht in einem Direktantrieb durch eine drehzahlgeregelte Hydraulikpumpe (WO-A-97/05387). Der Zylinder wird dabei direkt mit der Pumpe verbunden. Der Ölstrom wird durch die Pumpe oder durch den Antriebsmotor der Pumpe und nicht mehr durch das Ventil gesteuert. Damit wird das Ventil als hydraulisches Stellglied überflüssig. Die Aufgabe der Leistungssteuerung wird nun von leistungselektronischen Stellgliedern insbesondere Leistungstransistoren übernommen. Diese Komponenten befinden sich in der Regel im Umrichter, der den drehzahlvariablen Elektromotor mit Strom versorgt. Die Hydraulik übernimmt dabei nur noch die Aufgabe eines hydrostatischen Getriebes, die Steuerung und Regelung der Leistung wird durch die Elektrotechnik, insbesondere den Umrichter und den Elektromotor wahrgenommen.

Die Substitution von hydraulischen Stellgliedern wie Regelpumpen oder Ventilen durch elektronische Stellglieder, hat vielfältige Vorteile. Neben den Energieeinsparungen lässt sich durch dieses Vorgehen eine deutlich bessere Regelqualität, so unter anderem eine höhere Reproduzierbarkeit und eine höhere Temperaturstabilität bei deutlich tieferer Lärmentwicklung realisieren.

Auf der anderen Seite hat diese Lösung aber auch den Nachteil, daß der Elektromotor in der Regel eine grosse Trägheit aufweist, welche bei zyklischen Bewegungen hoher Frequenz entsprechend oft beschleunigt und verzögert werden muss. Dies schränkt die erreichbare Hubzahl solcher Antriebe stark ein und führt dazu, daß ein wesentlicher Teil der Motorenleistung für die Überwindung der Rotationsträgheit des Motors verwendet wird. Nur ein Teil der Motorenleistung steht so dem eigentlichen Arbeitsprozess zur Verfügung.

Je höher die Frequenz der Bewegung, desto mehr ist der Motor mit seiner eigenen Trägheit beschäftigt. Im Extremfall folgt der Motor während des ganzen Zyklus mit vollem Moment dem vorgegebenen Geschwindigkeitsprofil, ohne gegen aussen Arbeit zu verrichten. Dieser Zustand wird bei der maximal erreichbaren Hubzahl des Antriebes erreicht. Gegen aussen wird dann keine Energie mehr abgegeben, die Wicklungen des Motors sind ständig mit dem Maximalstrom beaufschlagt und erwärmen diesen entsprechend.

Die Erfindung setzt sich zum Ziel, schnelle zyklische Antriebe für hydraulische Maschinen zu schaffen, die ohne Regelventile arbeiten, mit leistungselektronischen Stellgliedern gesteuert werden und einem zyklischen Geschwindigkeitsprofil bei deutlich tieferem Leistungsbedarf folgen. Der geringere antriebseigene Leistungsbedarf soll es ermöglichen, höhere Hubzahlen bei tieferem Energieverbrauch zu realisieren oder einen höheren Leistungsanteil für den Arbeitsprozess in der Maschine verfügbar zu machen.

Es ist ein weiteres Ziel der Erfindung, einen solchen Antrieb als Antriebsmodul zu gestalten, das für eine Vielzahl von Maschinen und Antriebsaufgaben eingesetzt werden kann. Die Erfindung soll also ganz allgemein als Antrieb einer Maschinenachse auslegbar sein.

Ausgehend von der Eingangs genannten US-A-5,916,139 besteht die Aufgabe der Erfindung darin, einen Antrieb mit elektrischer Leistungssteuerung für Maschinen zu schaffen, die zyklisch Bewegungen mit hohen Beschleunigungen fahren müssen.

Die Aufgabe der Erfindung wird dadurch gelöst, daß der Elektromotor drehzahlvariabel ist und der Aktuator vier Zylinderkammern aufweist, von denen mindestens eine mit dem Energiespeicher, eine andere mit einem Anschluß der Pumpe und eine weitere mit dem anderen Anschluß der Pumpe verbunden ist.

Bei einer erfindungsgemäßen Vorrichtung zum Antrieb einer Lastmasse wirken zwei hydraulische Zylinder auf die anzutreibende Maschinenachse. Auf diese Weise entstehen vier Kammern, die hydraulisch mit der Maschinenachse verknüpft sind. Eine Kammer pro Zylinder ist mit je einem der beiden Anschlüsse einer hydraulischen Pumpe verbunden. Die jeweils andere Kammer der beiden Zylinder ist mit je einem Energiespeicher verbunden. Die Pumpe ist gekoppelt mit einem Elektromotor und wird von diesem angetrieben.

Die Hydraulikpumpe wirkt im geschlossenen hydraulischen Kreis auf die beiden angeschlossenen Zylinderkammern. Wird die Pumpe in eine Richtung vom Elektromotor angetrieben fährt die Maschinenachse in eine Richtung. Eine Richtungsumkehr des Elektromotors hat entsprechend eine Richtungsumkehr der Maschinenachse zur Folge.

Die beiden Energiespeicher beaufschlagen die Maschinenachse mit einer rücktreibenden Potentialkraft, welche im allgemeinen mit zunehmendem Verfahrweg des einen Zylinders zunimmt und im gegenüberliegenden Zylinder entsprechend abnimmt. Sind die Energiespeicher als Druckspeicher ausgebildet sind die Potentialkräfte Druckkräfte auf die Kolben der Zylinder. Die Energiespeicher können z.B. auch als elastische Feder ausgebildet sein.

Die beiden Energiespeicher wirken wie zwei Federn auf beiden Seiten der Lastmasse und machen aus dem System einen Oszillator. Die Geschwindigkeit von Hydraulikpumpe und Elektromotor sind hydraulisch mit der Lastmasse gekoppelt. Entsprechend ist die Lastmasse zusammen mit dem Rotationsträgheitsmoment von Pumpe und Motor wie eine einzige Massenträgheit zwischen zwei Federn zu betrachten. Dies gilt zumindest in erster Näherung, wenn man das eingespannte Öl als nicht kompressibel betrachtet.

Wird dieses System in ausgelenktem Zustand dem freien Spiel der Kräfte überlassen, ergibt sich eine Eigenschwingung des Feder-Masse-Systems, die im Wesentlichen durch die beiden Energiespeicher sowie alle Massen und Rotationsträgheiten definiert ist. Diese Eigenschwingung wird durch die hydraulischen und mechanischen Verlustleistung aller Komponenten gedämpft. In einem solchen erfindungsgemässen Oszillator wird Energie zwischen den Energiespeichern und der Maschinenachse bei einer Bewegung ausgetauscht. Druckenergie im Druckspeicher beschleunigt die Maschinenachse und wird damit in kinetische Energie von Maschine, Pumpe und Elektromotor umgewandelt. Bei einer Verzögerung wird wiederum kinetische Energie in potentielle Energie gewandelt.

Die Kräfte des Motors sind über die Leistungselektronik genau und sehr dynamisch steuerbar. Mit der Vorrichtung kann so auch eine Position gehalten oder ein beliebiges Geschwindigkeitsprofil gefahren werden. Im Allgemeinen wirken die Potentialkräfte der Energiespeicher als zusätzliche Lasten auf den Motor, die je nach dem die Bewegung der Vorrichtung unterstützen oder belasten können. Bei einer oszillierenden Bewegung wirken die Kräfte der Energiespeicher bei geeigneter Auslegung unterstützend, d.h. führen zu einer Reduktion des mittleren Strombelags des Motors verglichen zum gleichen Bewegungszyklus ohne Potentialkräfte der Energiespeicher.

Stimmt der Bewegungszyklus der Maschine mit der Eigenschwingung der Vorrichtung überein, muss der Motor nur noch minimale Verlustleistungen und die von der Vorrichtung gegen aussen verrichtete Leistung aufbringen. Im Idealfall werden also 100% der Antriebsleistung dem Arbeitsprozess als Nutzleistung zugeführt, wenn von Reibungen und hydraulischen Verlusten einmal abgesehen wird. Dies ganz im Gegensatz zu einem System nach dem Stand der Technik, das im schlechtsten Fall (bei der maximal erreichbaren Frequenz) die ganze Motorenleistung zur Beschleunigung des Motors benötigt und 0% der Antriebsleistung gegen aussen abgeben kann. Dies gilt auch bei einer Vernachlässigung von hydraulischen Verlusten in den Leitungen oder von Reibungsverlusten in den Komponenten der Vorrichtung.

Die Erfindung schlägt also einen neuen Antrieb mit elektrischer Leistungssteuerung für Maschinen vor, die zyklisch Bewegungen mit hohen Beschleunigungen fahren müssen. Ein Elektromotor treibt eine Pumpe, welche wiederum direkt mit einem Zylinder verbunden ist. Dieser Anordnung wird ein System von Druckspeichern und Ventilen aufgeschaltet, die dem System die Eigenschaft eines Oszillators geben. Die Beschleunigungskräfte bei einer zyklischen Bewegung nahe an der Resonanz werden dann weitgehend von den Druckspeichern und den damit verbundenen Zylindern geleistet.

Dies führt zu einer Entlastung des Elektromotors und ermöglicht geringere Leistungen auf der Maschine zu installieren oder aber bei gleicher Leistung kürzere Zykluszeiten der Maschine zu realisieren.

Verschiedene Ausführungsbeispiele der Erfindung sind in den Zeichnungen dargestellt und werden im folgenden anhand der Zeichnungen näher beschrieben. Es zeigt
- Fig. 1: eine schematische Darstellung einer erfindungsgemäßen Vorrichtung zum Antrieb einer Lastmasse;
- Fig. 2: eine schematische Darstellung einer erfindungsgemäßen Vorrichtung zum Antrieb einer Stanz- oder Prägmaschine;
- Fig. 3: eine schematische Darstellung einer erfindungsgemäßen Vorrichtung zum Antrieb einer Einspritzeinheit einer Spritzgiessmaschine; und
- Fig. 4: eine schematische Darstellung einer erfindungsgemäßen Vorrichtung zum Antrieb eines Drehgelenks.

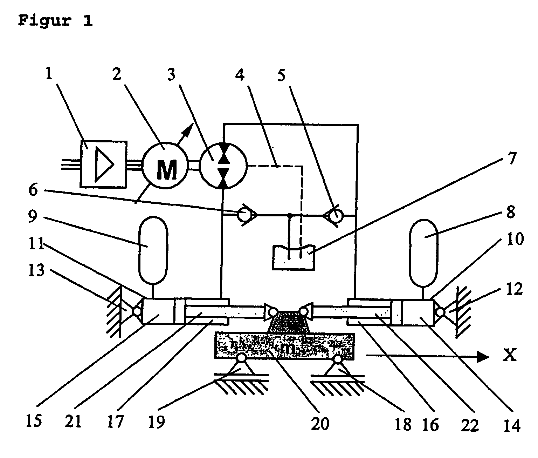

In Figur 1 wird ein erfindungsgemässer Antrieb dazu eingesetzt, eine Maschinenachse anzutreiben, bestehend aus einer Lastmasse 20, die auf den Führungen 18, 19 in Richtung X verschiebbar ist. Die Pumpe 3 ist hydraulisch mit zwei Kammern 16, 17 der Zylinder 10, 11 verbunden. Die beiden Zylinderstangen 21, 22 der Zylinder 10, 11 sind über die Last 20 mechanisch gekoppelt. Die Anordnung wirkt so wie ein einziger Zylinder, der im geschlossenen Kreis von der Pumpe 3 mit Drucköl versorgt wird.

Die Lager 12,13 symbolisieren eine feste mechanische Verbindung mit der Maschine. Die Leckageleitung 4 der Pumpe 3 führt einen kleinen Ölstrom in den Tank 7 ab. Über die beiden Rückschlagventile 5,6 gelangt das Öl wieder zurück in den Antriebskreislauf sobald der Druck in einer der beiden Pumpenanschlüsse unter das Druckniveau im Tank 7 sinkt. Der Tank 7 kann dabei als Tank, separate Pumpengruppe oder andere Druckquelle ausgebildet sein.

Fährt die Anordnung in Richtung X, so wird das Öl in der Kammer 14 in den Druckspeicher 8 ausgestossen und erhöht damit den Druck im Druckspeicher 8. Entsprechend vergrössert sich das Volumen in der Kammer 15 und sinkt der Druck im Druckspeicher 9. Daraus resultiert eine rücktreibende Kraft, welche durch die Drücke in den beiden Kammern 14, 15 definiert ist und sich mit zunehmender Auslenkung in Richtung X erhöht.

Erfindungsgemäss werden die Komponenten nun so ausgelegt, daß die rücktreibenden Kräfte das gewünschte Geschwindigkeitsprofil des Antriebes ideal unterstützen. Werden die Vorspanndrücke in den Druckspeichern 8, 9 sehr klein gewählt oder vernachlässigt, so ergibt sich praktisch ein reiner Pumpenantrieb im geschlossenen Kreis. Mit zunehmendem Druck in den Druckspeichern werden die Federkräfte der Druckspeicher grösser und unterstützen bei entsprechender Auslegung die gewünschte, zyklische Bewegung der Lastmasse. Motor 2, Pumpe 3, Zylinderstangen 21, 22 und Lastmasse 20 müssen dann nicht mehr ausschliesslich von den elektro-magnetischen Kräften des Motors 2 beschleunigt werden, sondern werden dabei von den Druckkräften der Druckspeicher unterstützt.

Je näher die Soll-Bewegung der Eigenschwingung des Systems kommt, desto höher der Leistungsanteil der Druckspeicherkräfte und desto geringer der Leistungsanteil des Motors.

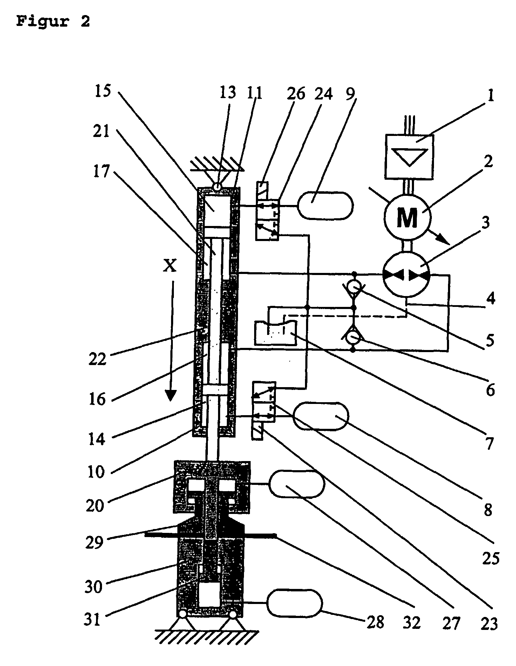

Figur 2 zeigt eine besonders vorteilhafte Ausgestaltung einer erfindungsgemässen Vorrichtung zum Antrieb einer Stanz- oder Prägmaschine. Die beiden Zylinder 10,11 wurden in einem Block 22 vereint. Als zusätzliches Element wurden zwei Ventile 24,25 eingebracht. Die Zylinderkammern 14,15 können mittels den Ventilmagneten 23,26 von den Druckspeichern 8,9 auf den Tank 7 geschaltet werden.

Damit wird auch die Federkraft von den Zylindern weggeschaltet. Schaltet man bei einer zyklischen Bewegung der Achse nach der Bewegungsumkehr die Druckspeicher aus, so ergibt sich in der Folge eine Phase im Bewegungszyklus, die nur noch vom Elektromotor getrieben ist. Dieser Betrieb kann sinnvoll sein, wenn relativ grosse Hübe bei näherungsweise konstanter Geschwindigkeit gefahren werden sollen.

Das Zu- und Abschalten der Ventile 24,25 kann durch die Position der Kolbenstange gesteuert werden, die Ventile 24,25 können auch im Zylinder integriert sein. Das Zu- und Abschalten geschieht dann immer an der gleichen Stelle. Der Antrieb verhält sich so wie ein Trampolinspringer, der auf eine Feder springt und von dieser zurückgeworfen wird um in der Folge eine näherungsweise kräftefreie, ballistische Bewegung zu machen. Erfindungsgemäss werden die Kräfte des Elektromotors 2 nur dazu verwendet, die Eigenform der Bewegung zu beeinflussen, damit die resultierende Bewegung den Erfordernissen des Arbeitsprozesses entspricht.

Die Druckspeicher 8,9,27,28 können auch für weitere hydraulische Nebenfunktionen verwendet werden wie etwa kleine Hilfskolben oder Ventilvorsteuerungen. Es braucht sich nicht notwendigerweise um 4 unabhängige Druckspeicher zu handeln, die Funktion des Oszillators kann auch mit nur einem Druckspeicher gewährleistet werden.

Das Stanzwerkzeug besteht aus den Teilen Stanzstempel 20, Pressplatte 29, Matrize 30, Auswerfer 31 und dem zu bearbeitendem Metallstreifen 32. Das in diesem Anwendungsbeispiel angedeutete Werkzeug ist passiv, d.h. die Bewegung von Pressplatte 29 und Auswerfer 31 sind durch hydraulische Federkräfte der Druckspeicher 27,28 und mechanische Bewegungsbegrenzung definiert, ohne eigene Bewegungssteuerung. Selbstverständlich können im Werkzeug auch weitere hydraulische Funktionen mit Ventilsteuerung integriert sein.

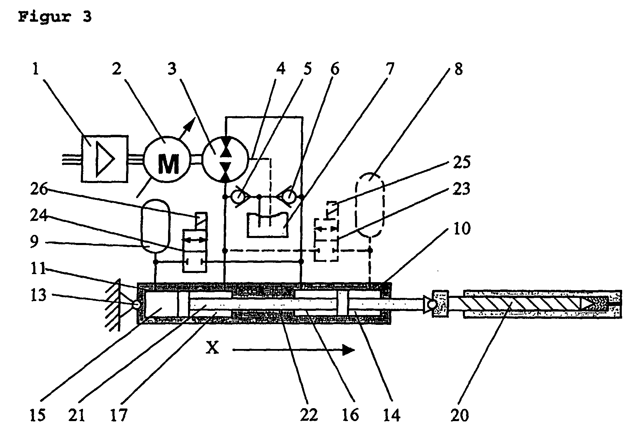

Figur 3 zeigt eine weitere vorteilhafte Ausführung einer erfindungsgemässen Vorrichtung. Die Maschinenachse ist hier als Einspritzeinheit 20 einer Spritzgiessmaschine ausgebildet und muss sehr hohe Kräfte und Leistungen in Richtung X aufbringen, um den Kunststoff unter hohem Druck in das Werkzeug einer nicht gezeichneten Maschine zu pressen. Nach dem Einspritzvorgang muss die Einspritzeinheit bei praktisch verschwindenden Kräften wieder in die Ausgangslage zurückgefahren werden.

Dieser asymmetrischen Aufgabe entspricht auch eine asymmetrische Auslegung der erfindungsgemässen Vorrichtung. Wählt man ein verhältnismässig hohes Druckniveau im Speicher 9 und einen verhältnismässig grossen Querschnitt der Zylinderkammer 15, so verschiebt sich der Kraftbereich der Vorrichtung hin zu positiven Kräften in Richtung X bei entsprechend verringerten Kräften in die Gegenrichtung.

Im Extremfall kann der Speicher 8 weggelassen werden. Bei geeigneter Auslegung der Vorrichtung wird das volle Moment des Motors 2 benötigt, um die Kolbenstange 21 in die Ausgangslage vor dem Einspritzvorgang zu bringen oder in dieser Position zu halten. Beim anschliessenden Einspritzvorgang arbeiten Motor 2, Pumpe 3 und Druckspeicher 9 in die gleiche Richtung. Auf diese Weise addieren sich die Leistungen von Druckspeicher und Pumpe.

Es ist leicht einzusehen, daß sich auf diese Weise die Leistung der eingesetzten Motor-Pumpengruppe verdoppeln lässt. Dies lässt sich in höhere Kräfte oder eine höhere Beschleunigung des Antriebes umsetzen. Diese Ausführungsform einer erfindungsgemässen Vorrichtung eignet sich also besonders in Maschinen, die sehr hohe Kräfte oder Beschleunigungen in nur eine Richtung erreichen müssen.

Die Ventile 23, 24 stellen ein weiteres spezielles Element einer erfindungsgemässen Vorrichtung dar. Die Ventilmagnete 25,26 schalten die Ventile 23,24 und verbinden damit die Druckspeicher 8,9 mit je einer Druckleitung der Pumpe. Auf diese Weise ist der Vorspanndruck in den Druckspeichern 8,9 veränderbar. Die Versorgung der Ventile kann dabei auch durch eine andere, unabhängige Druckquelle erfolgen. Neben dem Vorspanndruck kann mit dieser Einrichtung natürlich auch die neutrale Lage eingestellt werden. Unter neutraler Lage ist die Lage der Kolbenstange 21, bei der sich die Druckkräfte der Speicher 8,9 neutralisieren, zu verstehen.

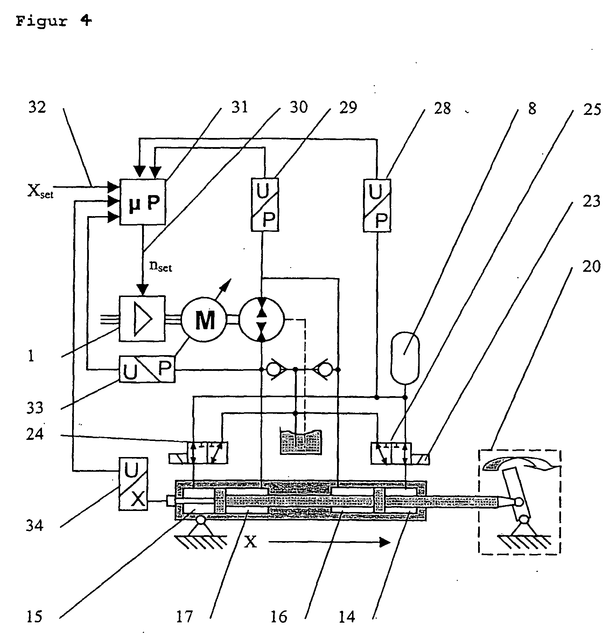

In Figur 4 ist die Maschinenachse 20 als Drehgelenk ausgebildet. Die erfindungsgemässe Vorrichtung entspricht dabei weitgehend der Vorrichtung in Figur 2. Die Druckspeicher 8,9 in Figur 2 sind allerdings durch einen einzigen Druckspeicher 8 ersetzt, der beide Ventile 24,25 mit Drucköl versorgt.

Zusätzlich wurden in Figur 4 Drucksensoren 28,29,33, ein Wegmesssystem 34 sowie ein Steuerrechner 31 eingezeichnet. Diese Elemente wurden in den Figuren 1 bis 3 aus Gründen der Übersichtlichkeit nicht gezeichnet, ermöglichen aber eine genauere Regelung der Vorrichtung. Das Wegmesssystem 34 kann dabei insbesondere auch in dem oder den Zylinder(n) integriert sein. Neben Druck und Position können auch zeitliche Ableitungen dieser Grössen erfasst werden.

Die Signale von Wegmesssystem 34 und Drucksensoren 28,29,33 stehen dem Steuerrechner 31 zur Verfügung, welcher den Umrichter 1 nach Massgabe eines Regelalgorithmus wie z.B. einer Zustandsregelung ansteuert. Die Sollbewegung der Vorrichtung Xset 32 wird dabei von einer übergeordneten Maschinensteuerung generiert. Dies ermöglicht die Regelung der Position wie auch der Kraft, welche von der erfindungsgemässen Vorrichtung auf die Maschinenachse 20 ausgeübt wird. Der Steuerrechner 31 kann auch im Umrichter oder in der übergeordneten Maschinensteuerung integriert sein. In vielen Anwendungen ist es ausreichend den Druck in nur einer Zylinderkammer 14,15,16,17 zu erfassen.

Die Verwendung der Vorrichtung ist sehr vielseitig. So kann sie z.B. zum Antrieb jeweils einer Achse eines Krans, einer Presse, einer Umformpresse, einer Biegepresse, einer Schere, einer Streckrichtmaschine, einer Testmaschine, einer Hebebühne, einer Stanzmaschine, einer Spritzgiessmaschine, einer Druckgiessmaschine oder einer anderen Maschine eingesetzt werden. Die Vorrichtung oder Teile davon ist/sind auch für andere Zwecke verwendbar und kann/können nur zeitweise im Sinne der Erfindung eingesetzt werden.

## Patentansprüche

1. Vorrichtung zum kontrollierten Antrieb einer Maschinenachse (20), mit einem Zylinderkammern (14, 15, 16, 17) aufweisenden hydraulischen Aktuator (10, 11), einer zwei Anschlüsse aufweisenden Pumpe (3), die im geschlossenen Kreis hydraulisch mit dem Aktuator (10, 11) verbunden ist, einem Elektromotor (2), der die Pumpe (3) antreibt, und mit mindestens einem Energiespeicher (8, 9), der mit Potentialkräften auf den hydraulischen Aktuator (10, 11) oder die Maschinenachse (20) wirkt und durch eine Bewegung der Maschinenachse (20) aufgeladen oder entladen wird, **dadurch gekennzeichnet, daß** der Elektromotor (2) drehzahlvariabel ist und der Aktuator (10, 11) vier Zylinderkammern (14, 15, 16, 17) aufweist, von denen mindestens eine (14, 15) mit dem Energiespeicher (8, 9), eine andere mit einem Anschluß der Pumpe (3) und eine weitere mit dem anderen Anschluß der Pumpe (3) verbunden ist.

2. Vorrichtung nach Anspruch 1, **dadurch gekennzeichnet, daß** zwei Energiespeicher (8, 9) und zwei Zylinder (10, 11) mit je zwei Zylinderkammern (14, 16; 15, 17) vorgesehen sind, und eine Zylinderkammer (15) des einen Zylinders (11) mit einem Energiespeicher (9) und die andere Zylinderkammer (17) des einen Zylinders (11) mit einem Anschluß der Pumpe (3) verbunden ist, und eine Zylinderkammer (14) des anderen Zylinders (10) mit dem anderen Energiespeicher (8) und die andere Zylinderkammer (16) des anderen Zylinders (10) mit dem anderen Anschluß der Pumpe (3) verbunden ist.

3. Vorrichtung nach Anspruch 1, **dadurch gekennzeichnet, daß** ein Energiespeicher (9) und zwei Zylinder (10, 11) mit je zwei Zylinderkammern (14, 16; 15, 17) vorgesehen sind, und eine Zylinderkammer (15) des einen Zylinders (11) mit dem Energiespeicher (9) und die andere Zylinderkammer (17) des einen Zylinders (11) mit einem Anschluß der Pumpe (3) verbunden ist und eine Zylinderkammer (16) des anderen Zylinders (10) über eine Druckleitung mit dem anderen Anschluß der Pumpe (3) verbunden ist, und der Energiespeicher (9) über ein schaltbares Ventil (24) mit der einen Druckleitung der Pumpe (3) verbindbar ist.

4. Vorrichtung nach Anspruch 3, **dadurch gekennzeichnet, daß** die andere Zylinderkammer (14) des anderen Zylinders (10) mit einem weiteren Energiespeicher (8) verbunden ist, und der weitere Energiespeicher (8) über ein schaltbares Ventil (23) mit einer den einen Anschluß der Pumpe (3) mit der anderen Zylinderkammer (17) des anderen Zylinders (11) verbindenden Druckleitung verbindbar ist.

5. Vorrichtung nach Anspruch 1, **dadurch gekennzeichnet, daß** ein Energiespeicher (8) und zwei Zylinder mit je zwei Zylinderkammern (14, 16; 15, 17) vorgesehen sind, und eine Zylinderkammer (15) des einen Zylinders über ein schaltbares Ventil (24) mit dem Energiespeicher (8) verbunden ist und eine Zylinderkammer (14) über ein weiteres schaltbares Ventil (23) mit dem Energiespeicher (8) verbunden ist.

6. Vorrichtung nach einem der Ansprüche 1 bis 5, **dadurch gekennzeichnet, daß** der oder die Energiespeicher durch mindestens ein Ventil oder eine Kupplung vom hydraulischen Aktuator oder von der Maschine getrennt werden können.

7. Vorrichtung nach einem der Ansprüche 1 bis 6, **dadurch gekennzeichnet, daß** der oder die Energiespeicher über ein zusätzliches Ventil oder eine zusätzliche Vorrichtung aufgeladen oder entladen werden können.

8. Vorrichtung nach einem der Ansprüch1 1 bis 7, **dadurch gekennzeichnet, daß** die hydraulischen Aktuatoren als hydraulische Zylinder, hydraulische Zylinder mit durchgehender Kolbenstange, Schwenkkolben, hydraulische Pumpen oder hydraulische Motoren ausgebildet sind.

9. Vorrichtung nach einem der Ansprüche 1 bis 8, **dadurch gekennzeichnet, daß** die Vorrichtung Sensoren aufweist, die Drücke, Positionen oder deren zeitliche Ableitungen messen und einer elektronischen Steuerung übermitteln.

10. Vorrichtung nach einem der Ansprüche 1 bis 9, **dadurch gekennzeichnet, daß** der Elektromotor als permanent erregter Synchronmotor, als vektorgeregelter Asynchronmotor, als Gleichstrommotor, als bürstenloser DC-Motor oder geschalteter Reluctance-Motor ausgebildet ist.

11. Vorrichtung nach einem der Ansprüche 1 bis 10, **dadurch gekennzeichnet, daß** eine innen- oder aussenverzahnte, kompensierte oder nichtkompensierte Zahnradpumpe, eine konstante oder verstellbare Axial- oder Radialkolbenpumpe, eine konstante oder verstellbare Flügelzellenpumpe, eine Schraubenpumpe oder eine andere hydrostatische Verdrängungseinheit eingesetzt wird.

12. Verwendung der Vorrichtung nach einem der Ansprüche 1 bis 11 zum Antrieb jeweils einer Achse eines Krans, einer Presse, einer Umformpresse, einer Biegepresse, einer Schere, einer Streckrichtmaschine, einer Testmaschine, einer Hebebühne, einer Stanzmaschine, einer Spritzgiessmaschine, oder einer Druckgiessmaschine.

## Claims

1. Device for driving a machine shaft (20) in a controlled manner, having a hydraulic actuator (10, 11) which has cylinder chambers (14, 15, 16, 17), a pump (3) which has two connections and which is hydraulically connected to the actuator (10, 11) in a closed circuit, an electric motor (2) which drives the pump (3), and having at least one energy storage device (8, 9) which acts on the hydraulic actuator (10, 11) or the machine shaft (20) with potential forces and which is charged or discharged by means of a movement of the machine shaft (20), **characterised in that** the speed of the electric motor (2) is variable and the actuator (10, 11) has four cylinder chambers (14, 15, 16, 17), of which at least one (14, 15) is connected to the energy storage device (8, 9), a second is connected to a connection of the pump (3) and a third is connected to the other connection of the pump (3).

2. Device according to claim 1, **characterised in that** two energy storage devices (8, 9) and two cylinders (10, 11) are each provided with two cylinder chambers (14, 16; 15, 17), and a cylinder chamber (15) of the first cylinder (11) is connected to an energy storage device (9) and the second cylinder chamber (17) of-the first cylinder (11) is connected to a connection of the pump (3), and a cylinder chamber (14) of the second cylinder (10) is connected to the other energy storage device (8) and the second cylinder chamber (16) of the second cylinder (10) is connected to the other connection of the pump (3).

3. Device according to claim 1, **characterised in that** an energy storage device (9) and two cylinders (10, 11) are each provided with two cylinder chambers (14, 16; 15, 17), and a cylinder chamber (15) of the first cylinder (11) is connected to the energy storage device (9) and the second cylinder chamber (17) of the first cylinder (11) is connected to a connection of the pump (3) and a cylinder chamber (16) of the second cylinder (10) is connected to the other connection of the pump (3) by means of a pressure line, and the energy storage device (9) can be connected to the first pressure line of the pump (3) by means of a switchable valve (24).

4. Device according to claim 3, **characterised in that** the second cylinder chamber (14) of the second cylinder (10) is connected to an additional energy storage device (8), and the additional energy storage device (8) can be connected, by means of a switchable valve (23), to a pressure line which connects the first connection of the pump (3) to the other cylinder chamber (17) of the other cylinder (11).

5. Device according to claim 1, **characterised in that** an energy storage device (8) and two cylinders are each provided with two cylinder chambers (14, 16; 15, 17), and a cylinder chamber (15) of the first cylinder is connected to the energy storage device (8) by means of a switchable valve (24) and a cylinder chamber (14) is connected to the energy storage device (8) by means of an additional switchable valve (23).

6. Device according to any one of claims 1 to 5, **characterised in that** the energy storage device(s) can be separated from the hydraulic actuator or from the machine by means of at least a valve or connection.

7. Device according to any one of claims 1 to 6, **characterised in that** the energy storage device(s) can be charged or discharged by means of an additional valve or an additional device.

8. Device according to any one of claims 1 to 7, **characterised in that** the hydraulic actuators are in the form of hydraulic cylinders, hydraulic cylinders having a continuous piston rod, pivoting pistons, hydraulic pumps or hydraulic motors.

9. Device according to any one of claims 1 to 8, **characterised in that** the device has sensors which measure pressures, positions or the time differentiations thereof and transmit them to electronic control.

10. Device according to any one of claims 1 to 9, **characterised in that** the electric motor is in the form of a permanently excited synchronous motor, a vector-controlled asynchronous motor, a direct current motor, a brush-less DC motor or a switched reluctance motor.

11. Device according to any one of claims 1 to 10, **characterised in that** a gear pump which has teeth at the inner or outer side and which may be compensated or not, a constant or variable axial or radial piston pump, a constant or variable vane pump, a screw-type pump or another hydrostatic displacement device is used.

12. Use of the device according to any one of claims 1 to 11, for driving, respectively, a shaft of a crane, a press, a forming press, a bending press, a shearing machine, a stretch levelling machine, a test machine, a lifting platform, a punching machine, an injection-moulding machine or a die casting machine.

## Revendications

1. Dispositif pour la commande contrôlée d'un arbre de machine (20), comprenant un actionneur hydraulique (10, 11) présentant des chambres de cylindres (14, 15, 16, 17), une pompe (3) présentant deux raccords, la pompe étant reliée en circuit fermé par voie hydraulique à l'actionneur (10, 11), un moteur électrique (2) qui entraîne la pompe (3), et au moins un accumulateur d'énergie (8, 9) qui agit avec des forces de potentiel sur l'actionneur hydraulique (10, 11) ou sur l'arbre de machine (20) et qui est chargé ou déchargé via un mouvement de l'arbre de machine (20), **caractérisé en ce que** le moteur électrique (2) est du type à vitesse réglable et l'actionneur hydraulique (10, 11) présente quatre chambres de cylindres (14, 15, 16, 17) dont au moins une (14, 15) est reliée à l'accumulateur d'énergie (8, 9), une autre étant reliée à un raccord de la pompe (3) et une autre étant reliée à l'autre raccord de la pompe (3).

2. Dispositif selon la revendication 1, **caractérisé en ce qu'**on prévoit deux accumulateurs d'énergie (8, 9) et deux cylindres (10, 11) comprenant respectivement deux chambres de cylindres (14, 16 ; 15, 17), une chambre de cylindre (15) du premier cylindre (11) étant reliée à un accumulateur d'énergie (9), l'autre chambre de cylindre (17) du premier cylindre (11) étant reliée à un raccord de la pompe (3), et une chambre de cylindre (14) de l'autre cylindre (10) étant reliée à l'autre accumulateur d'énergie (8), l'autre chambre de cylindre (16) de l'autre cylindre (10) étant reliée à l'autre raccord de la pompe (3).

3. Dispositif selon la revendication 1, **caractérisé en ce qu'**on prévoit un accumulateur d'énergie (9) et deux cylindres (10, 11) comprenant respectivement deux chambres de cylindres (14, 16 ; 15, 17), une chambre de cylindre (15) du premier cylindre (11) étant reliée à l'accumulateur d'énergie (9), l'autre chambre de cylindre (17) du premier cylindre (11) étant reliée à un raccord de la pompe (3), et une chambre de cylindre (16) de l'autre cylindre (10) étant reliée via un conduit de pression à l'autre raccord de la pompe (3), l'accumulateur d'énergie (9) pouvant être relié via une soupape réglable (24) au premier conduit de pression de la pompe (3).

4. Dispositif selon la revendication 3, **caractérisé en ce que** l'autre chambre de cylindre (14) de l'autre cylindre (10) est reliée à un autre accumulateur d'énergie (8), l'autre accumulateur d'énergie (8) pouvant être relié via une soupape réglable (23) à un conduit de pression reliant un raccord de la pompe (3) à l'autre chambre de cylindre (17) de l'autre cylindre (11).

5. Dispositif selon la revendication 1, **caractérisé en ce qu'**on prévoit un accumulateur d'énergie (8) et deux cylindres comprenant respectivement deux chambres de cylindres (14, 16 ; 15, 17), une chambre de cylindre (15) du premier cylindre étant reliée à l'accumulateur d'énergie (8) via une soupape réglable (24) et une chambre de cylindre (14) étant reliée à l'accumulateur d'énergie (8) via une autre soupape réglable (23).

6. Dispositif selon l'une quelconque des revendications 1 à 5, **caractérisé en ce que** l'accumulateur ou les accumulateurs d'énergie peuvent être séparés de l'actionneur hydraulique ou de la machine via au moins une soupape ou un embrayage.

7. Dispositif selon l'une quelconque des revendications 1 à 6, **caractérisé en ce que** l'accumulateur ou les accumulateurs d'énergie peuvent être chargés ou déchargés via une soupape supplémentaire ou via un dispositif supplémentaire.

8. Dispositif selon l'une quelconque des revendications 1 à 7, **caractérisé en ce que** les actionneurs hydrauliques sont réalisés sous la forme de cylindres hydrauliques, de cylindres hydrauliques que traversent des tiges de pistons, de pistons oscillants, de pompes hydrauliques ou de moteurs hydrauliques.

9. Dispositif selon l'une quelconque des revendications 1 à 8, **caractérisé en ce que** le dispositif présente des capteurs qui mesurent les pressions, les positions ou leurs décalages dans le temps et qui les transmettent à une commande électronique.

10. Dispositif selon l'une quelconque des revendications 1 à 9, **caractérisé en ce que** le moteur électrique est réalisé sous la forme d'une moteur synchrone excité en permanence, sous la forme d'un moteur asynchrone à réglage vectoriel, sous la forme d'un moteur à courant continu, sous la forme d'un moteur à courant continu sans balai ou sous la forme d'un moteur couplé à réluctance.

11. Dispositif selon l'une quelconque des revendications 1 à 10, **caractérisé en ce qu'**on met en oeuvre une pompe à roue dentée compensée ou non compensée à endentement interne ou externe, une pompe à piston axial ou radial constante ou réglable, une pompe à palettes constante ou réglable, une pompe à vis sans fin ou encore une autre unité à déplacement hydrostatique.

12. Utilisation du dispositif selon l'une quelconque des revendications 1 à 11, pour la commande de respectivement un arbre d'une grue, d'une presse, d'une presse de déformation, d'une presse de pliage, d'une cisaille, d'une redresseuse, d'une machine de contrôle, d'un pont élévateur, d'une machine de découpe, d'une machine de moulage par injection ou d'une machine de moulage par compression.
